# EUROPEAN PATENT APPLICATION

(11) **EP 4 438 539 A1**
(43) Date of publication of application: **02.10.2024**
(21) Application number: 23902027.4
(22) Date of filing: 29.05.2023
(51) Int. Cl.: B65H 75/44, B66C 13/14

(54) **CABLE REEL CONTROL DEVICE, CABLE REEL ASSEMBLY, AND WORK MACHINE**

(30) Priority: 14.12.2022 CN 202223359702 U
(71) Applicant: Sany Automobile Hoisting Machinery Co., Ltd, Changsha, Hunan 410600 (CN)
(72) Inventor: SONG, Zhenglin, Changsha, Hunan 410600 (CN); LI, Jie, Changsha, Hunan 410600 (CN); CHEN, Zejian, Changsha, Hunan 410600 (CN)
(74) Representative: Groth & Co. KB
(86) International application number: PCT/CN2023/096933
(87) International publication number: WO 2024/124815

(57) **Abstract**

The present application relates to a cable reel control apparatus, a cable reel, and a work machine. The cable reel control apparatus includes a motor, a controller, and a linkage switch. The motor is configured to drive a reel body to rotate, and the controller is configured to control a rotational speed of the motor. The linkage switch is arranged on a main circuit of the motor and is configured to control the main circuit to be connected or disconnected, the linkage switch is linked to the controller in such a way that, when the controller controls the motor to stop, the linkage switch controls the main circuit to be disconnected.

## Description

### CROSS-REFERENCE TO RELATED APPLICATION

This application claims priority to Chinese Patent Application No. 202223359702.8, filed on December 14, 2022, the disclosure of which is hereby incorporated by reference in its entirety.

### TECHNICAL FIELD

The present application relates to the field of working machine technologies, and in particular, to a cable reel control apparatus, a cable reel, and a work machine.

### BACKGROUND

An electric work machine is connected to a high-voltage line through a cable. Because the work machine usually needs to be frequently moved in a working process, to keep the cable from interfering with the work machine, a cable reel is usually arranged on the electric work machine.

For example, in a working process of an electric crane, a cable is reeled in or out through a cable reel. A cable reel apparatus includes a motor and a reel. The motor is configured to drive the reel to rotate to reel in or out a cable.

In some working conditions, a user needs to manually rotate the cable reel to reel in or out the cable. However, when the cable reel is manually rotated, the motor is driven to rotate. In this case, the motor forms a load of the cable reel, causing the problem that it is time-consuming and laborious to manually reel in or out the cable and the efficiency of reeling in or out the cable is low.

### SUMMARY OF THE INVENTION

The present application provides a cable reel control apparatus, a cable reel, and a work machine, to solve the problem that it is time-consuming and laborious to manually reel in or out a cable and the efficiency of reeling in or out the cable is low because a motor forms a load of a cable reel when a user manually rotates the cable reel.

A first aspect of the present application provides a cable reel control apparatus, including a motor, a controller, and a linkage switch,
where the motor is configured to drive a reel body to rotate, and the controller is configured to control a rotational speed of the motor; and
the linkage switch is arranged on a main circuit of the motor and is configured to control the main circuit to be connected or disconnected, the linkage switch is linked to the controller in such a way that, when the controller controls the motor to stop, the linkage switch controls the main circuit to be disconnected.

In an embodiment, the linkage switch is arranged to be a normally open relay, when the controller controls the motor to run, the normally open relay is closed to cause the main circuit to be connected, and when the controller controls the motor to stop, the normally open relay is open to cause the main circuit to be disconnected.

In an embodiment, the controller includes a U-phase contact, a V-phase contact, a W-phase contact, a positive contact, and a negative contact, where the U-phase contact, the V-phase contact, and the W-phase contact are respectively connected to three-phase electric contacts of the motor through a U-phase circuit, a V-phase circuit, and a W-phase circuit in a one-to-one correspondence, the positive contact is connected to a positive electrode of a power supply through a positive circuit, and the negative contact is connected to a negative electrode of the power supply through a negative circuit.

In an embodiment, three pairs of contacts of the normally open relay are respectively arranged on the U-phase circuit, the V-phase circuit, and the positive circuit, so as to enable the normally open relay to control the U-phase circuit, the V-phase circuit, and the positive circuit to be connected or disconnected.

In an embodiment, the controller includes a first gear switch for controlling the rotational speed of the motor, the normally open relay and the first gear switch are connected in series to a power supply, and when the first gear switch is switched off, the normally open relay is powered down and becomes open.

In an embodiment, the controller further includes a second gear switch for controlling the rotational speed of the motor, the first gear switch is connected in parallel to the second gear switch, a parallel-connected circuit formed by the first gear switch and the second gear switch, the normally open relay, and the power supply are connected in series, and when the first gear switch and the second gear switch are both switched off, the normally open relay is powered down and becomes open.

A second aspect of the present application provides a cable reel assembly, including a reel body and a control apparatus for controlling the reel body, where the control apparatus is the foregoing cable reel control apparatus.

In an embodiment, the motor is connected to the reel body through a driving gear and a driven gear in a motion-transmission manner.

In an embodiment, a cable baffle is arranged at each of two axial ends of the reel body.

A third aspect of the present application provides a work machine, including the foregoing cable reel control apparatus, or including the foregoing cable reel assembly.

The cable reel control apparatus provided in the present application includes a motor, a controller, and a linkage switch. The motor is configured to drive a reel body to rotate, and the controller is configured to control a rotational speed of the motor. The linkage switch is arranged on a main circuit of the motor and is configured to control the main circuit to be connected or disconnected, the linkage switch is linked to the controller, in such a way that when the controller controls the motor to stop, the linkage switch controls the main circuit to be disconnected. It needs to be noted that when the motor is a three-phase motor, the main circuit of the foregoing motor is a three-phase circuit of the motor. When the motor is a two-phase motor, the main circuit of the foregoing motor is a two-phase circuit of the motor. The linkage switch is arranged on the cable reel control apparatus provided in the present application, the linkage switch is configured to control the three-phase circuit or the two-phase circuit of the motor to be connected or disconnected, and the linkage switch is linked to the controller. Therefore, when the controller performs switching to a 0 gear, that is, the controller controls the motor to stop working, through the linkage of the linkage switch and the controller, the linkage switch controls the three-phase circuit or the two-phase circuit of the motor to be disconnected. Subsequently, when a user manually rotates a cable reel, the cable reel drives the motor to rotate. When the motor rotates, a reverse electromotive force is no longer generated, and the motor has a small resistance against the cable reel, thereby solving the problem in the prior art that it is time-consuming and laborious to manually reel in or out a cable and the efficiency of reeling in or out the cable is low because the motor forms a load of the cable reel when the user manually rotates the cable reel.

### BRIEF DESCRIPTION OF THE DRAWINGS

To describe the technical solutions in the present application or the prior art more clearly, the following briefly introduces the accompanying drawings required for describing the embodiments or the prior art. Apparently, the accompanying drawings in the following description show some embodiments of the present application, and a person of ordinary skill in the art may still derive other drawings from these accompanying drawings without creative efforts.
FIG. 1 is a schematic diagram of a cable reel control apparatus according to the present application; and
FIG. 2 is a schematic diagram of a cable reel apparatus according to the present application.

### Reference numerals:

11. motor; 12. normally open relay; 13. controller; 14. first gear switch; 15. second gear switch; 16. power supply; 17. cable; and 18. cable baffle.

### DETAILED DESCRIPTION

To make the objectives, technical solutions, and advantages of embodiments of the present application clearer, the following clearly and completely describes the technical solutions in embodiments of the present application with reference to the accompanying drawings in embodiments of the present application. It is clear that the described embodiments are merely some rather than all of embodiments of the present application. All other embodiments obtained by persons of ordinary skill in the art based on embodiments of the present application without creative efforts shall fall within the protection scope of the present application.

In the related art, a motor of a cable reel apparatus is configured to drive a reel body to rotate, to make the reel body reel in or out a cable. In some working conditions, a user needs to manually rotate the reel body to manually reel in or out a cable. However, when the cable is reeled in or out manually, the reel body drives the motor to rotate, and the motor generates a reverse electromotive force when rotating, forming a large resistance against the rotation of the reel body.

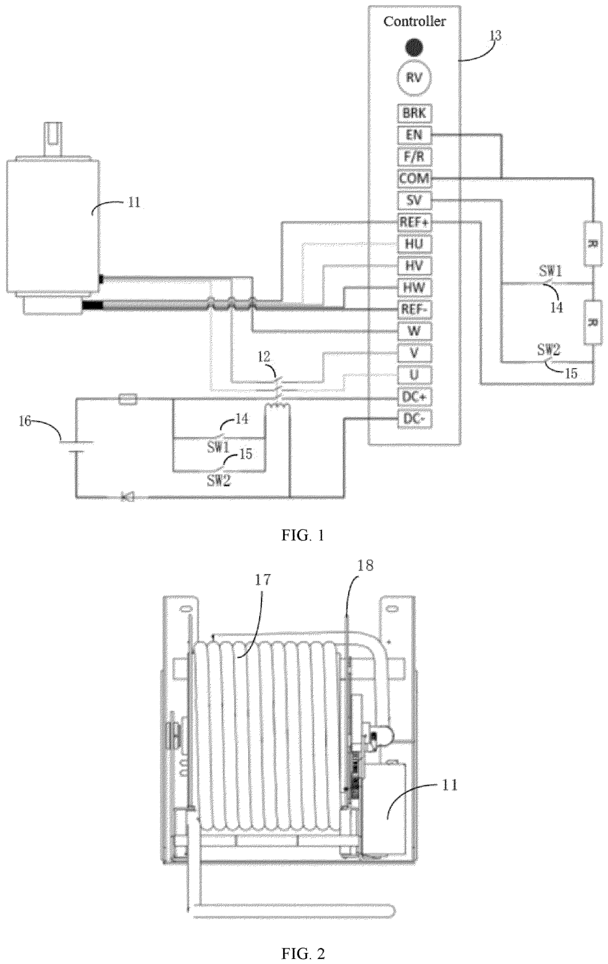

Based on the finding of the foregoing technical problems, referring to FIG. 1 and FIG. 2, this embodiment provides a cable reel control apparatus, including a motor 11, a controller 13, and a linkage switch.

The motor 11 is configured to drive a reel body to rotate. In some embodiments, a driving gear is arranged on an output shaft of the motor 11, a driven gear is arranged on a rotating shaft of the reel body, and the driving gear is engaged with the driven gear, to implement a transmission connection between the motor 11 and the reel body, thereby reeling in or out a cable 17. Certainly, in other embodiments, the motor 11 may be connected to the reel body through a sprocket assembly, a pulley assembly or another transmission mechanism.

The controller 13 is configured to control a rotational speed of the motor 11. In some embodiments, the controller 13 controls the motor 11 to switch between different gears to implement the running of the motor 11 in a plurality of gears. For the circuit principle of the controller 13, refer to the motor 11 and the controller 13 in the prior art. Details are not described herein again.

The linkage switch is arranged on a main circuit of the motor 11 and is configured to control the main circuit to be connected or disconnected, the linkage switch is linked to the controller 13 in such a way that, when the controller 13 controls the motor 11 to stop, the linkage switch controls the main circuit to be disconnected.

It needs to be noted that when the motor 11 is a three-phase motor 11, the main circuit of the foregoing motor 11 is a three-phase circuit of the motor 11. When the motor 11 is a two-phase motor 11, the main circuit of the foregoing motor 11 is a two-phase circuit of the motor 11. The three-phase motor 11 is used as an example for description in the following content. The linkage switch is arranged on the cable reel control apparatus provided in this embodiment, the linkage switch is configured to control the three-phase circuit of the motor 11 to be connected or disconnected, and the linkage switch is linked to the controller 13. Therefore, when the controller 13 performs switching to a 0 gear, that is, the controller 13 controls the motor 11 to stop working, through the linkage of the linkage switch and the controller 13, the linkage switch controls the three-phase circuit of the motor 11 to be disconnected. Subsequently, when a user manually rotates a cable reel, the cable reel drives the motor 11 to rotate. Because the three-phase circuit of the motor 11 is in a disconnected sate, when the motor 11 rotates, a reverse electromotive force is no longer generated, and the motor 11 has a small resistance against the cable reel, thereby solving the problem in the prior art that it is time-consuming and laborious to manually reel in or out a cable and the efficiency of reeling in or out the cable is low because the motor 11 forms a load of the cable reel when the user manually rotates the cable reel.

In an embodiment, the linkage switch is arranged to be a normally open relay 12, when the controller 13 controls the motor 11 to run, the normally open relay 12 is closed to cause the main circuit to be connected, and when the controller 13 controls the motor 11 to stop, the normally open relay 12 is open to cause the main circuit to be disconnected.

In this embodiment, when the controller 13 controls the motor 11 to run, that is, when the controller 13 controls the motor 11 to run in a non-0 gear, the normally open relay 12 is in a powered-up state, the main circuit of the motor 11 is connected, and the motor 11 runs normally. When the controller 13 controls the motor 11 to switch to a 0 gear, the normally open relay 12 is powered down through linkage, the normally open relay 12 is open, and the main circuit of the motor 11 forms an open circuit. In this case, when the main circuit of the motor 11 is in a disconnected state, the user rotates the cable reel, and the reel body drives the motor 11 to rotate, the motor 11 no longer forms a reverse electromotive force, so that a running resistance of the motor 11 is small, and a resistance caused by the motor 11 to the manual rotation of the cable reel can be effectively reduced.

In some embodiments, the controller 13 includes a U-phase contact, a V-phase contact, a W-phase contact, a positive contact, and a negative contact.

The positive contact and the negative contact are respectively connected to a positive electrode and a negative electrode of a power supply 16. In some embodiments, the power supply 16 may be a storage battery. The positive contact of the controller 13 is connected to a positive electrode of the storage battery through a positive circuit, and the negative contact of the controller 13 is connected to a negative electrode of the storage battery through a negative circuit. The U-phase contact, the V-phase contact, and the W-phase contact of the controller 13 are respectively connected to three-phase electric contacts of the motor 11 through a U-phase circuit, a V-phase circuit, and a W-phase circuit in a one-to-one correspondence.

Three pairs of contacts of the normally open relay 12 are respectively arranged on the U-phase circuit, the V-phase circuit, and the positive circuit, so as to enable the normally open relay 12 to control the U-phase circuit, the V-phase circuit, and the positive circuit to be connected or disconnected.

When the normally open relay 12 is powered up and closed, the U-phase circuit, the V-phase circuit, and the positive circuit are all connected, that is, the main circuit of the motor 11 is connected. When the normally open relay 12 is powered down and becomes open, the U-phase circuit, the V-phase circuit, and the positive circuit are all disconnected, that is, the main circuit of the motor 11 is disconnected.

Certainly, in other embodiments, the three pairs of contacts of the normally open relay 12 may be arranged on another line of the main circuit of the motor 11, provided that when the normally open relay 12 is in an open state, the main circuit of the motor 11 is disconnected, and the motor 11 does not form a reverse electromotive force.

In an embodiment, the controller 13 includes a first gear switch 14 for controlling the rotational speed of the motor 11, the normally open relay 12 and the first gear switch 14 are connected in series to the power supply 16, and when the first gear switch 14 is switched off, that is, when the first gear switch 14 is in a 0 gear, a series circuit formed by the normally open relay 12, the first gear switch 14, and the power supply 16 forms an open circuit, the normally open relay 12 is powered down and becomes open, and the main circuit of the motor 11 is disconnected. When the first gear switch 14 is in a non-0 gear, the normally open relay 12 is powered up, the series circuit formed by the normally open relay 12, the first gear switch 14, and the power supply 16 is a closed circuit, so that the main circuit of the motor 11 is a closed circuit.

In some embodiments, the controller 13 further includes a second gear switch 15 for controlling the rotational speed of the motor 11, the first gear switch 14 is connected in parallel to the second gear switch 15, a parallel-connected circuit formed by the first gear switch 14 and the second gear switch 15, the normally open relay 12, and the power supply 16 are connected in series, and when the first gear switch 14 and the second gear switch 15 are both switched off, the normally open relay 12 is powered down and becomes open.

The first gear switch 14 is connected in parallel to the second gear switch 15, so that the first gear switch 14 and the second gear switch 15 can both control the rotational speed of the motor 11. The first gear switch 14 is connected in parallel to the second gear switch 15 to form the parallel-connected circuit, and the parallel-connected circuit is further connected in series to the normally open relay 12 and the power supply 16. Similarly, with such an arrangement, when the first gear switch 14 and the second gear switch 15 are both in a switched-off state (a 0 gear), the normally open relay 12 is open, and the main circuit of the motor 11 is an open circuit. When at least one of the first gear switch 14 or the second gear switch 15 is in a non-0 gear, the normally open relay 12 is powered up, and the main circuit of the motor 11 is a closed circuit.

In some embodiments, the specific circuit principle of the controller 13 may be shown in FIG. 1. Pins of the controller 13 in FIG. 1 are defined in the following table.

| Terminal ID | Interface type | Signal description |
|---|---|---|
| BRK | Control signal | Brake signal: BRK being disconnected from COM indicates normal running, and BRK being short circuited indicates quick braking. |
| EN | | Enable signal: EN being disconnected from COM indicates that the motor slowly stops, and EN being short circuited indicates normal running. |
| F/R | | Direction signal: F/R being disconnected from COM indicates clockwise rotation, and F/R being short circuited indicates counterclockwise rotation. |
| COM | | Common port (a reference level of 0 V) |
| SV | | Speed regulation signal: During speed regulation by an external potentiometer, a middle lead-out terminal is connected here, and REF+ and COM ports are connected on two sides. |
| REF+ | Hall signal | Motor Hall signal power terminal |
| HU | | Motor Hall signal HU |
| HV | | Motor Hall signal HV |
| HW | | Motor Hall signal HW |
| REF- | | Motor Hall signal grounding line |
| W | Power circuit | Motor W phase |
| V | | Motor V phase |
| U | | Motor U phase |
| DC+ | | Direct current power supply is connected to a positive electrode |
| DC- | | Direct current power supply is connected to a negative electrode |

Another embodiment of the present application provides a cable reel assembly, including a reel body and a control apparatus for controlling the reel body, where the control apparatus is the cable reel control apparatus in any foregoing embodiment.

With such an arrangement, for the cable reel assembly provided in this embodiment, when the user manually rotates a cable reel, the cable reel drives the motor to rotate. When the motor rotates, a reverse electromotive force is no longer generated, and the motor has a small resistance against the cable reel, thereby solving the problem in the prior art that it is time-consuming and laborious to manually reel in or out a cable and the efficiency of reeling in or out the cable is low because the motor forms a load of the cable reel when the user manually rotates the cable reel. A derivation process of the beneficial effect is approximately similar to a derivation process of the beneficial effect brought by the foregoing cable reel control apparatus. Details are not described herein again.

It needs to be noted that in this embodiment, the transmission connection between the motor and the reel body may be gear transmission, pulley assembly transmission, sprocket assembly transmission, or another manner.

To keep the cable 17 wound around the reel body from falling off, a cable baffle 18 may be arranged at each of two ends of the reel body. Under the action of the cable baffles 18, the problem that the cable 17 falls off the reel body can be avoided.

An embodiment of the present application further provides a work machine, including the cable reel control apparatus described above, or including the cable reel assembly described above. The work machine may be specifically an excavator, a crane, or the like.

In the description of the embodiments of the present application, it needs to be noted that unless otherwise expressly specified and defined, terms "connected" and "connection" should be understood in a broad sense, for example, fixedly connected, detachably connected, or integrally connected; or mechanically connected, or electrically connected; or connected directly or through an intermediate. For a person of ordinary skill in the art, specific meanings of the foregoing terms in embodiments of the present application may be understood based on a specific situation.

In the description of the specification, the description with reference to terms "an embodiment", "some embodiments", "a manner", "a specific manner" or "some manners", and the like indicate that specific features, structures, materials or characteristics described with reference to the embodiments or manners are included in at least one embodiment or manner of the embodiments of the present application. In the specification, the schematic descriptions of the foregoing terms do not necessarily involve the same embodiments or manners. In addition, the described specific features, structures, materials or characteristics may be combined in an appropriate manner in any one or more embodiments or manners. In addition, a person skilled in the art may integrate and combine different embodiments or manners or features in different embodiments or manners in the specification without causing any contradictions.

Finally, it should be noted that the foregoing implementations are merely intended for describing the present application rather than limiting the present application. Although the present application is described in detail with reference to the embodiments, persons of ordinary skill in the art should understand that they may still make various combinations, modifications or equivalent replacements to the technical features of the present application without departing from the spirit and scope of the technical solutions of the technical solutions of the present application. These modifications or equivalent replacements shall all fall within the scope of the claims the present application.

## Claims

1. A cable reel control apparatus, comprising a motor (11), a controller (13), and a linkage switch,
wherein the motor (11) is configured to drive a reel body to rotate, and the controller (13) is configured to control a rotational speed of the motor (11); and
the linkage switch is arranged on a main circuit of the motor (11) and is configured to control the main circuit to be connected or disconnected, the linkage switch is linked to the controller (13) in such a way that, when the controller (13) controls the motor (11) to stop, the linkage switch controls the main circuit to be disconnected.

2. The cable reel control apparatus according to claim 1, wherein the linkage switch is arranged to be a normally open relay (12), when the controller (13) controls the motor (11) to run, the normally open relay (12) is closed to cause the main circuit to be connected, and when the controller (13) controls the motor (11) to stop, the normally open relay (12) is open to cause the main circuit to be disconnected.

3. The cable reel control apparatus according to claim 2, wherein the controller (13) comprises a U-phase contact, a V-phase contact, a W-phase contact, a positive contact, and a negative contact, wherein the U-phase contact, the V-phase contact, and the W-phase contact are respectively connected to three-phase electric contacts of the motor (11) through a U-phase circuit, a V-phase circuit, and a W-phase circuit in a one-to-one correspondence, the positive contact is connected to a positive electrode of a power supply (16) through a positive circuit, and the negative contact is connected to a negative electrode of the power supply (16) through a negative circuit.

4. The cable reel control apparatus according to claim 3, wherein three pairs of contacts of the normally open relay (12) are respectively arranged on the U-phase circuit, the V-phase circuit, and the positive circuit, so as to enable the normally open relay (12) to control the U-phase circuit, the V-phase circuit, and the positive circuit to be connected or disconnected.

5. The cable reel control apparatus according to claim 2, wherein the controller (13) comprises a first gear switch (14) for controlling the rotational speed of the motor (11), the normally open relay (12) and the first gear switch (14) are connected in series to a power supply (16), and when the first gear switch (14) is switched off, the normally open relay (12) is powered down and becomes open.

6. The cable reel control apparatus according to claim 5, wherein the controller (13) further comprises a second gear switch (15) for controlling the rotational speed of the motor (11), the first gear switch (14) is connected in parallel to the second gear switch (15), a parallel-connected circuit formed by the first gear switch (14) and the second gear switch (15), the normally open relay (12), and the power supply (16) are connected in series, and when the first gear switch (14) and the second gear switch (15) are both switched off, the normally open relay (12) is powered down and becomes open.

7. A cable reel assembly, comprising a reel body and a control apparatus for controlling the reel body, wherein the control apparatus is the cable reel control apparatus according to any one of claims 1 to 6.

8. The cable reel assembly according to claim 7, wherein the motor (11) is connected to the reel body through a driving gear and a driven gear in a motion-transmission manner.

9. The cable reel assembly according to claim 7, wherein a cable baffle (18) is arranged at each of two axial ends of the reel body.

10. A work machine, comprising the cable reel control apparatus according to any one of claims 1 to 6, or comprising the cable reel assembly according to any one of claims 7 to 9.
